# FASCICULE DE BREVET EUROPEEN

(11) **EP 1 646 533 B1**
(45) Date de publication et mention de la délivrance du brevet: **05.12.2012**
(21) Numéro de dépôt: 04767692.9
(22) Date de dépôt: 15.07.2004
(51) Int. Cl.: B60R 16/02, B60H 1/00, B60R 11/00, B60K 37/02

(54) **DISPOSITIF DE CONTROLE POUR VEHICULE AUTOMOBILE**
STEUERVORRICHTUNG FÜR EIN KRAFTFAHRZEUG
CONTROL DEVICE FOR A MOTOR VEHICLE

(30) Priorité: 17.07.2003 FR 0308733
(43) Date de publication de la demande: 19.04.2006
(73) Titulaire: VALEO SYSTEMES THERMIQUES, 78320 Le Mesnil St. Denis (FR)
(72) Inventeur: LE GALLIC, Lan, F-93370 Montfermeil (FR); AUTRAN, Frédéric, F-75018 Paris (FR)
(74) Mandataire: Croonenbroek, Thomas Jakob
(86) Numéro de dépôt international: PCT/FR2004/001868
(87) Numéro de publication internationale: WO 2005/009798

(56) Documents cités:
- EP-A- 0 744 322
- US-A- 5 889 337
- US-B1- 6 494 527

## Description

L'invention concerne les dispositifs de contrôle pour véhicules automobiles et en particulier les dispositifs de contrôle d'un appareil de climatisation et d'un système audio.

Dans des réalisations existantes, les dispositifs de contrôle pour véhicules automobiles comprennent un dispositif de contrôle de climatisation distinct du dispositif de contrôle audio. De tels dispositifs de contrôle comprennent un tableau de commande respectif qui permet à un passager du véhicule d'entrer des commandes.

En général, le dispositif de contrôle de climatisation est placé en dessous du dispositif de contrôle audio, de sorte que l'accès au tableau de commande de climatisation, par exemple pour activer ou désactiver la climatisation ou encore régler des paramètres de climatisation, est peu confortable pour le conducteur du véhicule.

Par ailleurs, le dispositif de contrôle de climatisation et le dispositif de contrôle audio sont parfois réalisés par des constructeurs distincts, et par suite l'apparence des tableaux de commandes diffère, ce qui nuit à l'esthétique de l'intérieur du véhicule.

Chacun des dispositifs de contrôle comprend en général un microcontrôleur monté sur une carte de circuit imprimé et alimenté par une source d'alimentation. Ces composants sont coûteux et augmente le coût total des dispositifs de contrôle de la climatisation et du système audio.

Les documents US 5889 337 et US 6494527 décrivent un tel état de la technique, selon le preamble de la revendication 1.

Le but de l'invention est de remédier à ces inconvénients.

A cet effet, l'invention propose un dispositif de contrôle pour un véhicule à moteur, destiné à permettre le contrôle d'un appareil de climatisation et d'un système audio, ledit dispositif de contrôle comportant:
- une interface utilisateur commune propre à recevoir des commandes d'un utilisateur, et
- une unité de contrôle propre à échanger des données avec l'interface utilisateur commune, caractérisé en ce que l'unité de contrôle est munie d'un contrôleur commun propre à mettre en oeuvre à la fois les fonctions de contrôle de l'appareil de climatisation et les fonctions de contrôle du système audio.

Des caractéristiques optionnelles du dispositif selon l'invention, complémentaires ou de substitution, sont énoncées ci-après:
- le contrôleur est relié à une source d'alimentation commune pour les fonctions de contrôle relatives au système audio et à l'appareil de climatisation.
- l'unité de contrôle comprend un bus de communication commun reliant ledit contrôleur à l'interface utilisateur pour un échange de données.
- l'unité de contrôle est reliée à des capteurs agencés sur le véhicule par des fils respectifs.
- l'unité de contrôle est reliée par un bus de véhicule à des contrôleurs additionnels du véhicule, à des interfaces du système audio et à des interfaces de l'appareil de climatisation, tandis que l'unité de contrôle comprend un circuit de réveil commun propre à être activé par le bus de véhicule et/ou par une commande provenant de l'interface utilisateur.
- le circuit de réveil comprend une interface de réveil et une interface de bus de véhicule.
- l'unité de contrôle et l'interface utilisateur commune sont montées sur des cartes de circuit imprimé respectives.
- le dispositif de contrôle comprend des connecteurs de liaison interne pour permettre la communication entre l'interface utilisateur commune et l'unité de contrôle.
- l'interface utilisateur comprend un écran commun pour l'affichage des informations relatives à la climatisation et au système audio.
- le dispositif de contrôle comporte un châssis commun dans lequel sont logés le contrôleur, les interfaces audio entre le contrôleur et le système audio et les interfaces de climatisation entre le contrôleur et l'appareil de climatisation.

D'autres caractéristiques et avantages de l'invention apparaîtront à l'examen de la description détaillée ci-après, et des dessins annexés sur lesquels:
- la figure 1A est un schéma représentant la structure générale d'un dispositif de contrôle d'un système audio selon l'art antérieur;
- la figure 1B est un schéma représentant la structure générale d'un dispositif de contrôle d'une appareil de climatisation selon l'art antérieur;
- la figure 1C est un schéma représentant la structure générale d'un dispositif de contrôle d'une appareil de climatisation et d'un système audio selon l'invention;
- la figure 2 est une vue de haut, schématique d'un véhicule muni du dispositif de commande de l'invention;
- la figure 3 est un schéma structurel du dispositif de commande de l'invention;
- la figure 4A représente des entrées/sorties du contrôleur d'un dispositif de commande audio selon l'art antérieur ;
- la figure 4B représente des entrées/sorties du contrôleur d'un dispositif de commande de climatisation selon l'art antérieur ;
- la figure 4C représente des entrées/sorties du contrôleur d'un dispositif de commande de climatisation selon l'invention 1 ; et
- la figure 5 est une vue de profil du dispositif de commande selon l'invention.

Les dessins contiennent, pour l'essentiel, des éléments de caractère certain. Ils pourront donc non seulement servir à mieux faire comprendre la description, mais aussi contribuer à la définition de l'invention, le cas échéant.

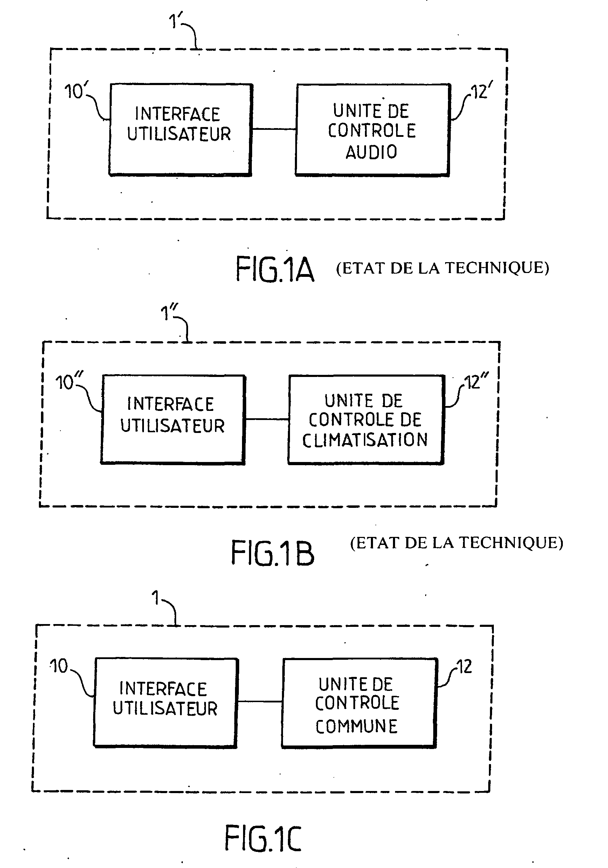

La figure 1A est un schéma représentant un dispositif de contrôle d'un système audio 1' de l'art antérieur. Un tel dispositif de commande comprend une unité de contrôle 12' qui effectue plusieurs types de contrôles en fonction des commandes entrées par un utilisateur sur une interface utilisateur 10', tels qu'un contrôle de volume ou une lecture de CD.

L'unité de contrôle audio 12' comprend un contrôleur, en particulier un microcontrôleur, qui échange des données avec l'interface utilisateur 10' via un bus. L'unité de contrôle 12' comprend en outre un système audio dont lé fonctionnement est contrôlé par le microcontrôleur sur la base des commandes reçues de l'interface utilisateur.

L'unité de contrôle 12' comprend une source d'alimentation, en particulier de +5V connectée au microcontrôleur, un convertisseur analogique/numérique, un processeur audio DSP, un circuit et une interface de réveil, et un gestionnaire d'affichage interagissant avec le microcontrôleur. L'unité de contrôle comprend également des connecteurs de type faisceau de véhicule propres à assurer l'alimentation, l'acquisition de signaux d'entrée et le contrôle de l'ensemble des actuateurs audio (haut-parleurs, chargeur de disque compact, options diverses).

L'unité de contrôle 12' comprend en outre des interfaces audio telles qu'un chargeur de disque externe, reliées au contrôleur par un bus de véhicule.

L'interface utilisateur audio 10' peut comprendre un écran, un connecteur de type liaison interne pour la communication entre l'unité de contrôle audio et l'interface utilisateur, des boutons poussoirs et/ou des boutons rotatifs.

Le microcontrôleur 12' est monté sur une carte de circuit imprimé et l'ensemble de l'unité de contrôle est logée dans un châssis. Le châssis comprend un compartiment avant dans lequel est logée l'interface utilisateur audio 10'. L'interface utilisateur audio est munie d'un tableau de commande sur la face du compartiment avant du châssis qui comporte un écran d'affichage et un ensemble de boutons poussoirs et/ou rotatifs pour permettre à l'utilisateur d'entrer des commandes ainsi qu'une ouverture de lecteur audio, par exemple de lecteur de disque compact. Le compartiment arrière du châssis comprend en outre le système audio.

Ainsi, le dispositif de commande audio de l'art antérieur constitue un bloc séparé muni de ses propres composants électroniques.

La figure 1B représente un schéma d'un dispositif de contrôle 1" d'un appareil de climatisation de l'art antérieur. Le dispositif de contrôle comprend une unité de contrôle 12" munie d'un contrôleur, notamment d'un microcontrôleur interagissant avec une interface utilisateur 10 " prévue pour qu'un passager du véhicule puisse entrer des commandes relatives à la climatisation du véhicule.

Le véhicule peut être muni de capteurs ou de contrôleurs additionnels qui transmettent des informations mesurées ou calculées au contrôleur de climatisation, comme par exemple l'ensoleillement, la température extérieure au véhicule, la température de l'air de l'habitacle, L'humidité ou encore la qualité de l'air, etc. Ces informations peuvent être transmises au contrôleur via un bus de véhicule relié aux contrôleurs additionnels ou via des fils dédiés reliés à des capteurs spécifiques.

Le microcontrôleur est propre à traiter les informations reçues et à activer les différents actuateurs du système de climatisation (stepper, moteur DC, ventilateur, etc.) pour assurer le confort optimum dans l'habitacle du véhicule.

L'utilisateur peut sélectionner les paramètres de climatisation/chauffage qu'il souhaite, comme par exemple la température de l'air de l'habitacle, la vitesse du groupe-moto ventilateur.

L'unité de contrôle 12" comprend en outre une source d'alimentation, en particulier de +5V, connectée au microcontrôleur, un connecteur de liaison de type liaison interne pour la communication entre l'unité de contrôle et l'interface utilisateur, un circuit et une interface de réveil, un bus de communication dédié au transfert d'informations entre l'interface utilisateur de climatisation 10' et l'unité de contrôle, un gestionnaire d'affichage et un convertisseur analogique/numérique.

Des connecteurs de type faisceau de véhicule assurent l'alimentation, l'acquisition de signaux d'entrée et le contrôle de l'ensemble des actuateurs audio (haut-parleurs, chargeur de disque compact, options diverses).

L'unité de contrôle 12" comprend en outre des interfaces de la climatisation (comme le compresseur ou la pompe électrique additionnelle) reliées au contrôleur par le bus de véhicule.

L'interface utilisateur de climatisation 10" est munie d'un tableau de commande qui peut comporter un écran, des boutons poussoirs, et des boutons rotatifs.

Dans les réalisations existantes, l'unité de contrôle 12" comprend une carte de circuit imprimée sur laquelle est montée le microcontrôleur de climatisation. Le dispositif de contrôle de climatisation comprend un châssis dans lequel sont logés l'unité de contrôle 12" et les interfaces de climatisation.

Le châssis comporte un compartiment avant dans lequel est logée l'interface utilisateur de climatisation 10". La face du compartiment avant du châssis est constituée par le tableau de commande de l'interface utilisateur. Ainsi le dispositif de commande de climatisation de l'art antérieur constitue également un bloc séparé muni de ses propres composants électroniques.

Dans les dispositifs de commande audio et de climatisation de l'art antérieur, les microcontrôleur, l'alimentation +5V, le bus de communication, l'écran et la carte de circuit imprimé sont des composants coûteux. Comme ces dispositifs de commande sont montés indépendamment l'un de l'autre, ils occupent une place relativement importante dans le véhicule. De plus, les faces avant respectives des dispositifs de commande audio et de climatisation peuvent avoir une présentation différente et nuire ainsi à l'esthétique de l'habitacle.

La figure 1C représente la structure générale du dispositif de contrôle selon l'invention. Le dispositif de commande de l'invention intègre à la fois les fonctions de contrôle du système audio et les fonctions de contrôle de l'appareil de climatisation, ce qui permet de diminuer le nombre de composants électroniques et de réduire le coût du contrôle de la climatisation et du système audio.

L'unité de contrôle 12 selon l'invention assure le contrôle audio et le contrôle de climatisation conjointement. Elle comprend un microcontrôleur commun qui est capable de réaliser à la fois les fonctions du microcontrôleur audio et du microcontrôleur de climatisation de l'art antérieur. L'unité de contrôle comprend en outre une carte de circuit imprimée commune sur laquelle est monté le microcontrôleur commun.

L'unité de contrôle 12 interagit avec une interface utilisateur commune 10 pour le contrôle audio et le contrôle de climatisation.

L'unité de contrôle commune 12 est montée dans un châssis. Le châssis comprend un compartiment avant dans lequel est logée l'interface utilisateur commune 10. L'interface utilisateur commune estmunie d'un tableau de commande sur la face du compartiment avant du châssis pour permettre à l'utilisateur d'entrer des commandes de climatisation et des commandes pour le système audio.

Le tableau de commande comporte un écran commun pour l'affichage d'informations relatives à la climatisation et au système audio, des boutons poussoirs et/ou des boutons rotatifs pour permettre à l'utilisateur l'entrée des commandes, ainsi que des connecteurs d'interface. Le tableau de commande comprend également une ouverture de lecteur audio, par exemple de lecteur de disque compact. Le compartiment arrière du châssis loge également les interfaces audio et de climatisation le mécanisme de disque compact, le tuner ou les contrôleurs de moteurs pas à pas ("stepper").

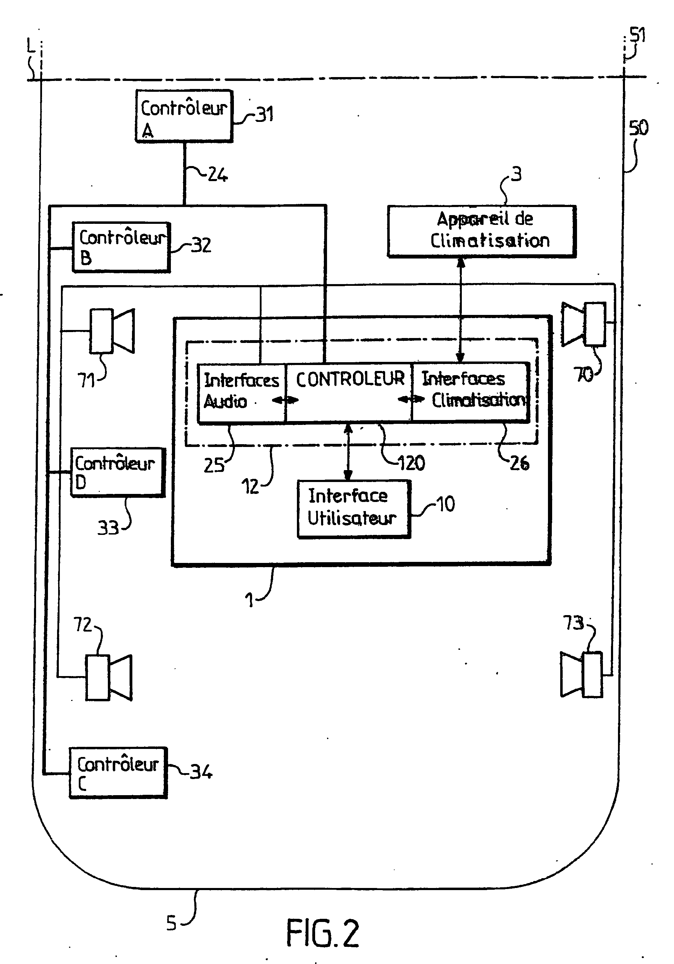

On se réfère maintenant à la figure 2 qui est un schéma d'un véhicule 5 muni du dispositif de contrôle 1 de l'invention.

Le véhicule 5 comprend un compartiment habitacle 50 et un compartiment moteur 51 délimités par la ligne L représentée en trait interrompu. Le véhicule comprend un compartiment prévu pour loger le dispositif de contrôle 1 de l'invention, de sorte que la face avant comprenant l'interface utilisateur soit accessible au conducteur du véhicule. En particulier, ce compartiment peut correspondre au compartiment de logement du dispositif de contrôle audio de l'art antérieur.

Le compartiment habitacle 50 est muni de bouches de sortie d'air par lesquelles arrive l'air climatisé et de sorties audio 70, 71, 72, 73 telles que des enceintes par lesquelles arrivent les signaux audio avec les paramètres spécifiés par l'utilisateur.

L'unité de contrôle 12 se trouve dans le compartiment habitacle 50 et interagit avec l'appareil de climatisation 3.

L'unité de contrôle 12 comprend un microcontrôleur 120, des interfaces audio 25 avec le système audio et des interfaces de climatisation 26 avec l'appareil de climatisation. L'unité de contrôle 12 communique avec l'interface utilisateur 10 via un bus de communication 123. Ce bus est dédié au transfert d'informations d'interface utilisateur (Interface Homme-Machine), par exemple des informations de type entrée/ sortie, de type bouton poussoir/rotatif, de type éclairage, ou de type affichage.

Le véhicule 5 peut être muni de capteurs ou de contrôleurs additionnels 31, 32, 33, 34 qui transmettent des informations mesurées ou calculées au microcontrôleur commun 120, comme par exemple l'ensoleillement, la température extérieure au véhicule, la température de l'air de l'habitacle, la température dans le lecteur de disques compacts L'humidité ou encore la qualité de l'air, etc. Ces informations peuvent être transmises au microcontrôleur 120 via un bus de véhicule 24 reliés aux contrôleurs additionnels ou via des fils dédiés reliés à des capteurs spécifiques.

Le microcontrôleur 120 utilise certaines de ces informations, comme par exemple la température extérieure ou la vitesse du véhicule pour activer les différents actuateurs du système de climatisation (moteur pas à pas, moteur à courant continu, ventilateur, etc.), ce qui permet d'assurer un confort optimisé dans l'habitacle du véhicule.

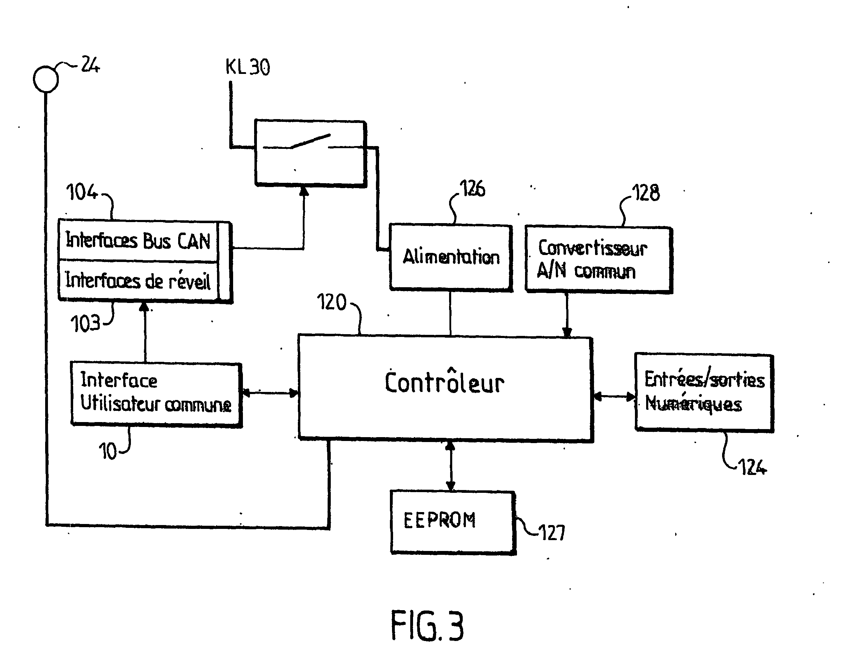

La figure 3 représente un schéma structurel du dispositif de contrôle 1 de l'invention.

L'unité de contrôle 12 comprend un contrôleur 120, en particulier un microcontrôleur. Elle comprend également une source d'alimentation commune 126, notamment de +5V, connectée à la tension batterie KL30, une mémoire EEPROM 127 et un convertisseur analogique/numérique commun 128 pour convertir des informations audio et de climatisation afin de les rendre compatibles à un traitement numérique par le microcontrôleur 120, par exemple des informations provenant des capteurs de l'appareil de climatisation 3, de l'interface tuner du système audio et de l'interface de surveillance de la tension batterie.

L'unité de contrôle 12 comprend également un ensemble d'entrées/sorties numériques 124 pour l'acquisition de signaux ainsi que le contrôle des interfaces du système audio 24 et des interfaces de l'appareil de climatisation 25 telles que le mécanisme de disque compact, le tuner, le processeur audio DSP ("Digital Signal Processor"), les contrôleurs de moteurs pas à pas (stepper) et les contrôleurs de moteurs à courant continu.

Le microcontrôleur communique également avec un gestionnaire d'affichage qui génère l'affichage des données sur un écran commun de l'interface utilisateur 10. Ce gestionnaire d'affichage assure l'affichage relatif au contrôle de climatisation et au contrôle du système audio.

L'unité de contrôle comprend un circuit d'horloge non représenté. Le microcontrôleur peut ajuster la date et l'heure affichés sur l'écran de l'interface utilisateur 10 lorsque l'utilisateur le commande depuis le tableau de commande. Le circuit d'horloge maintient la date et l'heure du jour et modifie ces paramètres si le microcontrôleur le commande. Le microcontrôleur génère l'affichage de ces paramètres sur l'écran via le gestionnaire d'affichage.

La fonction horloge permet aussi d'assurer une fonction de réveil du système et l'activation d'un module de préchauffage de l'habitacle dans les régions froides, soit par le bus véhicule soit par une liaison directe.

L'unité de contrôle 12 comprend un circuit de réveil lui permettant d'être réactivé soit par le bus véhicule (CAN) soit par une demande venant de l'interface utilisateur 10. Le circuit de réveil comprend une interface de réveil 103 et une interface de bus véhicule (bus CAN) qui assure les réveils requis par le bus CAN. L'interface de réveil 103 est dédiée au réveil du dispositif de commande. Le réveil peut être activé soit par une fonction audio soit par une fonction liée à la climatisation.

L'invention présente l'avantage de réduire l'ensemble des connexions électriques nécessaires pour le contrôle audio et le contrôle de climatisation. En particulier, dans les réalisations de l'art antérieur, on utilise deux bus de communication respectifs pour le dispositif de contrôle de climatisation et pour le dispositif de contrôle audio. Le dispositif de contrôle 1 de l'invention permet de réduire les deux bus de communication de l`unité de contrôle de l'art antérieur à un bus de communication commun 123.

Le microcontrôleur peut échanger des données avec l'interface utilisateur 10 via ce bus de communication 123.

L'interface utilisateur comprend un écran d'affichage qui peut être commun pour l'affichage des informations relatives au contrôle audio et au contrôle de climatisation. Le tableau de commande de l'interface utilisateur 10 peut comprendre également des éléments de commandes tels que des boutons poussoirs, des boutons rotatifs, des interrupteurs pour permettre l'entrée des commandes par l'utilisateur.

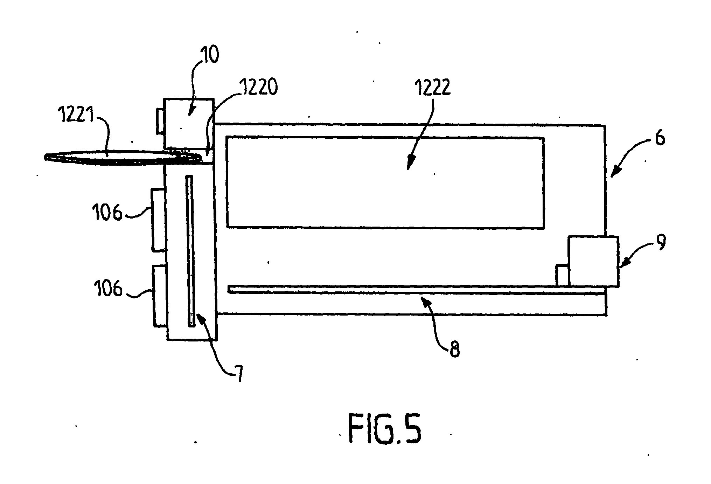

La figure 5 est une vue de profil du dispositif de commande de l'invention. Dans l'exemple de la figure 5, le système audio comprend une ouverture 1220 propre à recevoir un disque compact 1221 interagissant avec un mécanisme de disque compact 1222 qui réalise les différentes fonctions relatives au disque compact, telles que la lecture ou l'éjection d'un disque compact. Les commandes de l'utilisateur sont réalisées sur le tableau de commande de l'interface utilisateur 10 au moyen des éléments de commande 106 qui peuvent être par exemple des boutons rotatifs ou des boutons poussoirs. Les commandes de l'utilisateur sont véhiculées via le bus de communication 123 de l'interface utilisateur 10, qui est montée sur une carte de circuit imprimé 7, vers l'unité de contrôle qui est montée sur la carte de circuit imprimé 8.

Des connecteurs 9 de type "faisceau de véhicule" sont également prévus pour le dispositif de contrôle. Les connecteurs 9 assurent l'alimentation, l'acquisition de signaux d'entrée et le contrôle de l'ensemble des actuateurs audio et de climatisation, tels que les haut-parleurs et les moteurs.

Le dispositif de commande est monté dans un châssis 6 ayant un compartiment avant 6' dans lequel est logée l'interface utilisateur 10. La face de ce compartiment avant-comprend le tableau de commande qui sont peut être manipulé par l'utilisateur. Des connecteurs de type "liaison externe" sont également prévus pour assurer la communication entre l'unité de contrôle et l'interface utilisateur 10 d'une part et entre le mécanisme de disque compact et l'unité de contrôle, d'autre part.

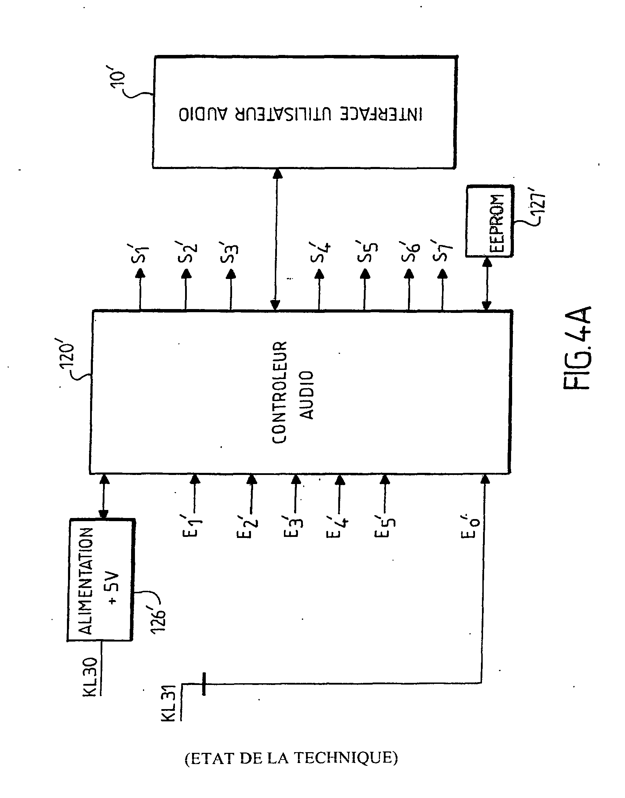

La figure 4A représente les ports d'entrées/sorties et les liaisons d'un microcontrôleur audio 120' de l'art antérieur.

Un microcontrôleur audio classique comprend les entrées suivantes :
- une entrée reliée à une source d'alimentation de + 5V qui alimente notamment le mécanisme CD et le tuner, connectée à la tension batterie KL30;
- une entrée E'0 reliée à une masse KL31;
- une entrée E'1 reliée à un système propre à effectuer la surveillance de la tension batterie KL30 et à assurer un comportement stable du système;
- une entrée E'2 reliée à des capteurs analogiques, par exemple des capteurs de températures présents dans le lecteur de disque compact pour éviter une surcharge;
- une entrée E'3 reliée à des capteurs numériques;
- une entrée E'4 reliée à des entrées numériques; et
- une entrée E'5 reliée au bus véhicule pour l'échange de données du micro contrôleur;

Le microcontrôleur audio classique comprend les sorties/liaisons suivantes :
- une liaison S'1 avec un écran d'affichage,
- une sortie S'2 vers un ventilateur pour refroidir le dispositif de contrôle audio;
- une sortie S'3 vers le système de rétro-éclairage du tableau de commande du dispositif de contrôle audio, pour l'éclairage de nuit de la face;
- une liaison S'4 avec un mécanisme de disque compact;
- une liaison S'5 avec le tuner;
- une liaison S'6 avec un processeur audio DSP;
- une sortie S'7 vers un amplificateur audio; et
- une liaison avec une mémoire EEPROM.

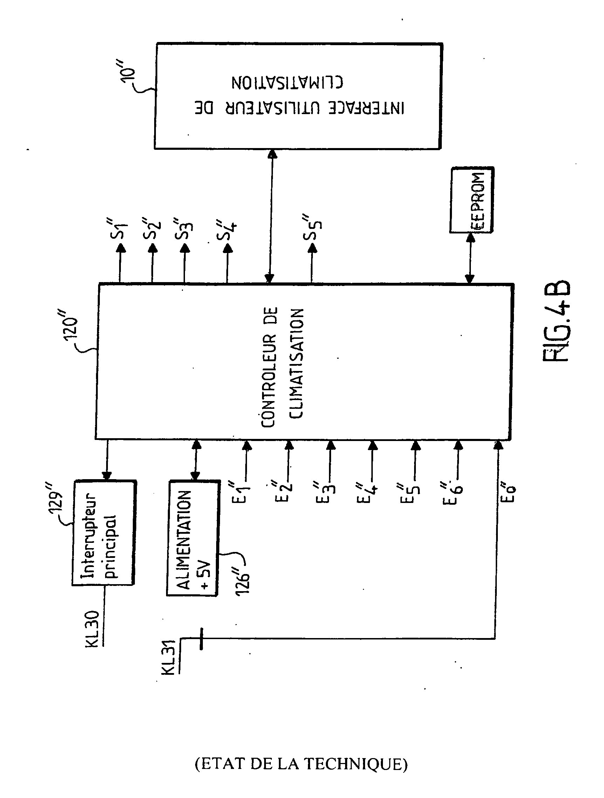

La figure 4B représente les ports d'entrées/sorties et les liaisons d'un microcontrôleur de climatisation 120" de l'art antérieur.

Un microcontrôleur de climatisation classique comprend les entrées suivantes :
- une entrée reliée à un interrupteur électronique de puissance 129" qui active le dispositif de contrôle de climatisation relié à la tension de batterie KL30;
- une alimentation 126" qui délivre une tension de + 5V;
- une masse KL31 reliée à une entrée E"0;
- une entrée E"1 reliée à un système propre à effectuer la surveillance de la tension batterie KL30 et à assurer un comportement stable du système;
- une entrée E"2 reliée à des capteurs analogiques, par exemple des capteurs pour mesurer la température en sortie des bouches d'air ou la température de l'habitacle;
- une entrée E"3 reliée à des capteurs numériques qui comprennent par exemple des capteurs de température d'ensoleillement;
- une entrée E"4 reliée à des entrées numériques;
- une entrée E"5 reliée à une sonde de température de l'habitacle; et
- une entrée E"6 reliée au bus véhicule.

Le microcontrôleur de climatisation classique comprend les sorties/liaisons suivantes :
- une liaison S"1 avec un écran d'affichage,
- une liaison S"2 avec un gestionnaire de moteur pas à pas (moteurs "stepper");
- une liaison S"3 avec un gestionnaire de moteurs à courant continu;
- une sortie S"4 vers un système de rétro-éclairage de la face avant du dispositif de contrôle de climatisation, pour l'éclairage de nuit de sa face avant;
- une sortie S "5 vers le ventilateur de la climatisation;
- une entrée/sortie vers l'interface utilisateur de climatisation 10" pour l'échange de données; et
- une liaison avec une mémoire EEPROM.

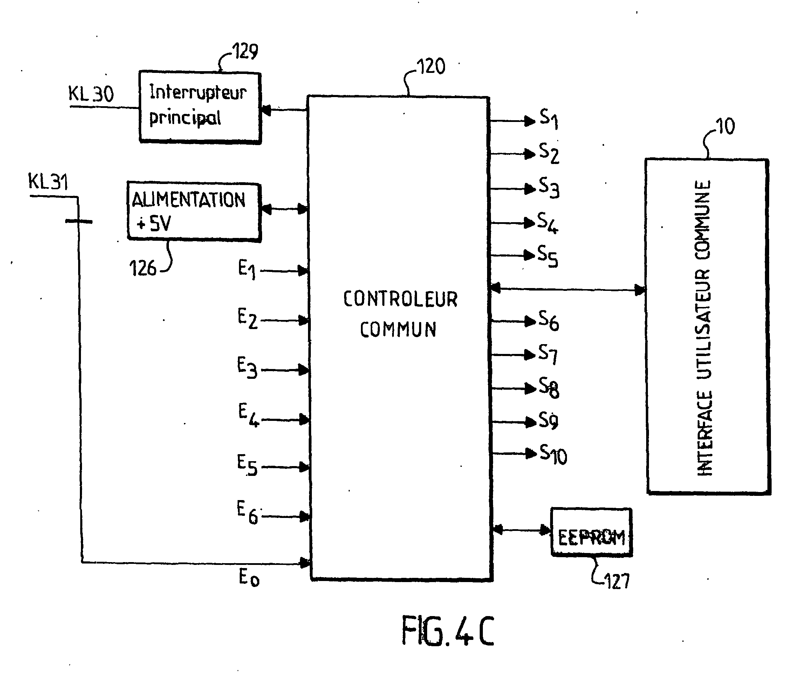

La figure 4C représente des exemples de ports d'entrées/sorties et les liaisons d'un microcontrôleur de climatisation 120 selon l'invention.

Un microcontrôleur commun audio/climatisation selon l'invention peut comprendre les entrées/liaisons suivantes :
- une entrée reliée à un interrupteur électronique de puissance 129 qui active le dispositif de contrôle de climatisation relié à la tension batterie KL30;
- une entrée commune E0 reliée à une source d'alimentation 126 commune de + 5V qui alimente notamment le microcontrôleur et les interfaces du système audio et de la climatisation telles que le mécanisme de dise compact, le tuner, le processeur audio DSP ("Digital Signal Processor"), les contrôleurs de moteurs pas à pas (stepper) et les contrôleurs de moteurs DC;
- une entrée commune reliée à une masse KL31 commune;
- une entrée E1 commune reliée à un système propre à effectuer la surveillance de la tension batterie KL30 et à assurer un comportement stable du système;
- une liaison E2 commune reliée aux capteurs analogiques audio et de climatisation;
- une liaison E3 commune reliée aux capteurs numériques audio et de climatisation;
- une liaison E4 commune reliée à des entrées numériques; et
- une liaison E5 commune reliée à un bus de communication commun pour l'échange de données audio et de climatisation du microcontrôleur.
- une liaison E6 analogue à l'entrée E"5 du dispositif de la figure 4B;

Le microcontrôleur audio et de climatisation de l'invention classique peut comprendre les sorties/liaisons suivantes :
- une sortie commune S1 vers un écran d'affichage commun,
- une liaison S2 analogue à la sortie S"2 du dispositif de la figure 4B;
- une liaison S3 analogue à la sortie S"3 du dispositif de la figure 4B;
- une sortie S4 vers un système de rétro-éclairage commun de la face avant du dispositif de contrôle de climatisation, pour l'éclairage dé nuit de sa face avant;
- une sortie S5 analogue à la sortie S"5 du dispositif de la figure 4B;
- une sortie S6 analogue à la sortie S'2 du dispositif de la figure 4A;
- une liaison S7 analogue à la sortie S'4 du dispositif de la figure 4A;
- une liaison S8 analogue à la sortie S'5 du dispositif de la figure 4A;
- une liaison S9 analogue à la sortie S'6 du dispositif de la figure 4A;
- une sortie S10 analogue à la sortie S'7 du dispositif de la figure 4A;
- une entrée/sortie commune avec une interface utilisateur commune 10 pour l'échange de données; et
- une sortie commune vers une mémoire commune EEPROM.

La mise en commun de certains composants électroniques tels que le microcontrôleur, l'alimentation, le bus de communication, l'écran et les cartes de circuit imprimé du dispositif de contrôle de l'invention permet de réduire le coût total du contrôle de climatisation et du contrôle audio.

Par ailleurs, l'intégration du contrôle de la climatisation et du contrôle du système audio réduisent l'encombrement du dispositif de contrôle par rapport à l'art antérieur.

Le contrôle de l'appareil de climatisation et du système audio est réalisé par des composants qui sont logés dans un bloc commun, munie d'une interface utilisateur commune. L'apparence de l'interface est donc plus homogène, améliorant ainsi l'esthétique de l'habitacle.

Le dispositif de contrôle de l'invention est en outre plus compact que l'ensemble constitué par le dispositif de contrôle audio et le dispositif de contrôle de climatisation de l'art antérieur, ce qui permet à l'utilisateur de manipuler le tableau de commande de l'interface utilisateur de manière plus confortable.

L'utilisation d'un seul contrôleur pour le contrôle de climatisation et le contrôle du système audio permet d'envisager de nouvelles fonctions de contrôle prenant en compte à la fois des paramètres audio et des paramètres de climatisation, comme par exemple une fonction d'adaptation du niveau sonore du system audio en fonction de la puissance de ventilation dans l'habitacle.

En outre, l'invention permet aussi de réduire l'intensité consommée de l'ensemble constitué par le système audio et l'appareil de climatisation en mode veille.

En effet dans ce mode de fonctionnement, la consommation est liée au fait qu'une partie du système reste alimentée. En particulier, cette partie du système correspond soit à l'alimentation elle-même, soit à l'interface du bus véhicule. Dans l'art antérieur, le système audio et l'appareil de climatisation sont séparés et sont munis chacun d'une alimentation et d'une interface de bus véhicule. Par suite la consommation dans le mode veille est plus importante dans les réalisations de l'art antérieur. Le dispositif de contrôle de l'invention dispose d'une alimentation et d'une interface de bus véhicule communes pour le contrôle de climatisation et le contrôle audio et permet ainsi de réduire la consommation dans le mode veille.

## Revendications

1. Dispositif de contrôle pour un véhicule à moteur, destiné à permettre le contrôle d'un appareil de climatisation (3) et d'un système audio, ledit dispositif de contrôle comportant:
- une interface utilisateur commune (10) propre à recevoir des commandes d'un utilisateur, et :
- une unité de contrôle (12) propre à échanger des données avec l'interface utilisateur commune (10), **caractérisé en ce que** l'unité de contrôle est munie d'un contrôleur commun (120) propre à mettre en oeuvre à la fois les fonctions de contrôle de l'appareil de climatisation et les fonctions de contrôle du système audio, et **en ce que** l'unité de contrôle (12) comprend en outre une carte de circuit imprimé commune sur laquelle est monté le contrôleur commun (120).

2. Dispositif de contrôle selon la revendication 1, **caractérisé en ce que** le contrôleur (120) est relié à une source d'alimentation commune (126) pour les fonctions de contrôle relatives au système audio et à l'appareil de climatisation.

3. Dispositif de contrôle selon l'une des revendications précédentes, **caractérisé en ce que** l'unité de contrôle (12) comprend un bus de communication commun (123) reliant ledit contrôleur à l'interface utilisateur commune (10) pour un échange de données.

4. Dispositif de contrôle selon l'une des revendications précédentes, **caractérisé en ce que** l'unité de contrôle (12) est reliée à des capteurs agencés sur le véhicule par des fils respectifs.

5. Dispositif de contrôle selon l'une des revendications précédentes, **caractérisé en ce que** l'unité de contrôle (12) est reliée par un bus de véhicule (24) à des contrôleurs additionnels (31, 32, 33, 34) du véhicule, à des interfaces avec le système audio (25) et à des interfaces avec l'appareil de climatisation (26), et **en ce que** l'unité de contrôle comprend un circuit de réveil commun propre à être activé par le bus de véhicule et/ou par une commande provenant de l'interface utilisateur (10).

6. Dispositif de contrôle selon la revendication 5, **caractérisé en ce que** le circuit de réveil comprend une interface de réveil (103) et une interface de bus de véhicule (104).

7. Dispositif de contrôle selon l'une des revendications précédentes, **caractérisé en ce que** l'unité de contrôle (12) et l'interface utilisateur commune (10) sont montées sur des cartes de circuit imprimé respectives (7, 8).

8. Dispositif de contrôle selon l'une des revendication précédentes, **caractérisé en ce qu'**il comprend des connecteurs de liaison interne pour permettre la communication entre l'interface utilisateur commune (10) et l'unité de contrôle (12).

9. Dispositif de contrôle selon l'une des revendications précédentes, **caractérisé en ce que** l'interface utilisateur comprend un écran commun pour l'affichage des informations relatives à la climatisation et au système audio.

10. Dispositif de contrôle selon les revendications précédentes, **caractérisé en ce qu'**il comporte un châssis commun dans lequel sont logés le contrôleur (120), les interfaces audio avec le système audio (25) et les interfaces de climatisation avec l'appareil de climatisation (3).

## Claims

1. Control device for a motor vehicle, intended to make it possible to control an air-conditioning apparatus (3) and an audio system, said control device comprising:
- a common user interface (10) designed to receive commands from a user, and:
- a control unit (12) designed to exchange data with the common user interface (10), **characterized in that** the control unit is provided with a common controller (120) designed to implement both the control functions of the air-conditioning apparatus and the control functions of the audio system, and **in that** the control unit (12) also comprises a common printed circuit board on which the common controller (120) is mounted.

2. Control device according to Claim 1, **characterized in that** the controller (120) is linked to a common power supply source (126) for the control functions relating to the audio system and to the air-conditioning apparatus.

3. Control device according to one of the preceding claims, **characterized in that** the control unit (12) comprises a common communication bus (123) linking said controller to the common user interface (10) for an exchange of data.

4. Control device according to one of the preceding claims, **characterized in that** the control unit (12) is linked to sensors arranged on the vehicle by respective wires.

5. Control device according to one of the preceding claims, **characterized in that** the control unit (12) is linked by a vehicle bus (24) to additional controllers (31, 32, 33, 34) of the vehicle, to interfaces with the audio system (25) and to interfaces with the air-conditioning apparatus (26), and **in that** the control unit comprises a common reactivation circuit designed to be activated by the vehicle bus and/or by a command originating from the user interface (10).

6. Control device according to Claim 5, **characterized in that** the reactivation circuit comprises a reactivation interface (103) and a vehicle bus interface (104).

7. Control device according to one of the preceding claims, **characterized in that** the control unit (12) and the common user interface (10) are mounted on respective printed circuit boards (7, 8).

8. Control device according to one of the preceding claims, **characterized in that** it comprises internal link connectors for enabling communication between the common user interface (10) and the control unit (12).

9. Control device according to one of the preceding claims, **characterized in that** the user interface comprises a common screen for displaying information relating to the air-conditioning and to the audio system.

10. Control device according to the preceding claims, **characterized in that** it comprises a common frame in which are housed the controller (120), the audio interfaces with the audio system (25) and the air-conditioning interfaces with the air-conditioning apparatus (3).

## Patentansprüche

1. Steuervorrichtung für ein Motorfahrzeug, die dazu bestimmt ist, die Steuerung eines Klimageräts (3) und eines Audiosystems zu ermöglichen, wobei die Steuervorrichtung Folgendes aufweist:
- eine gemeinsame Benutzerschnittstelle (10), die Befehle von einem Benutzer empfangen kann, und:
- eine Steuereinheit (12), die mit der gemeinsamen Benutzerschnittstelle (10) Daten austauschen kann,
**dadurch gekennzeichnet, dass** die Steuereinheit mit einem gemeinsamen Steuergerät (120) ausgestattet ist, das gleichzeitig die Steuerfunktionen des Klimageräts und die Steuerfunktionen des Audiosystems ausführen kann, und dass die Steuereinheit (12) außerdem eine gemeinsame Druckschaltungskarte enthält, auf die das gemeinsame Steuergerät (120) montiert ist.

2. Steuervorrichtung nach Anspruch 1, **dadurch gekennzeichnet, dass** das Steuergerät (120) mit einer gemeinsamen Versorgungsquelle (126) für die Steuerfunktionen bezüglich des Audiosystems und des Klimageräts verbunden ist.

3. Steuervorrichtung nach einem der vorhergehenden Ansprüche, **dadurch gekennzeichnet, dass** die Steuereinheit (12) einen gemeinsamen Kormmunikationsbus (123) enthält, der das Steuergerät für einen Datenaustausch mit der gemeinsamen Benutzerschnittstelle (10) verbindet.

4. Steuervorrichtung nach einem der vorhergehenden Ansprüche, **dadurch gekennzeichnet, dass** die Steuereinheit (12) über jeweilige Drähte mit Sensoren verbunden ist, die auf dem Fahrzeug angeordnet sind.

5. Steuervorrichtung nach einem der vorhergehenden Ansprüche, **dadurch gekennzeichnet, dass** die Steuereinheit (12) durch einen Fahrzeugbus (24) mit zusätzlichen Steuergeräten (31, 32, 33, 34) des Fahrzeugs, mit Schnittstellen mit dem Audiosystem (25) und mit Schnittstellen mit dem Klimagerät (26) verbunden ist, und dass die Steuereinheit eine gemeinsame Aufweckschaltung enthält, die vom Fahrzeugbus und/oder durch einen Befehl aktiviert werden kann, der von der Benutzerschnittstelle (10) kommt.

6. Steuervorrichtung nach Anspruch 5, **dadurch gekennzeichnet, dass** die Aufweckschaltung eine Aufweckschnittstelle (103) und eine Fahrzeugbus-Schnittstelle (104) enthält.

7. Steuervorrichtung nach einem der vorhergehenden Ansprüche, **dadurch gekennzeichnet, dass** die Steuereinheit (12) und die gemeinsame Benutzerschnittstelle (10) auf jeweilige Druckschaltungskarten (7, 8) montiert sind.

8. Steuervorrichtung nach einem der vorhergehenden Ansprüche, **dadurch gekennzeichnet, dass** sie Verbinder zur inneren Verbindung enthält, um die Kommunikation zwischen der gemeinsamen Benutzerschnittstelle (10) und der Steuereinheit (12) zu ermöglichen.

9. Steuervorrichtung nach einem der vorhergehenden Ansprüche, **dadurch gekennzeichnet, dass** die Benutzerschnittstelle einen gemeinsamen Bildschirm für die Anzeige der Informationen bezüglich der Klimatisierung und des Audiosystems enthält.

10. Steuervorrichtung nach den vorhergehenden Ansprüche, **dadurch gekennzeichnet, dass** sie einen gemeinsamen Rahmen, aufweist, in dem das Steuergerät (120), die Audioschnittstellen mit dem Audiosystem (25) und die Klimatisierungsschnittstellen mit dem Klimagerät (3) untergebracht sind.
